# EUROPEAN PATENT APPLICATION

(11) **EP 3 579 593 A1**
(43) Date of publication of application: **11.12.2019**
(21) Application number: 18176437.4
(22) Date of filing: 07.06.2018
(51) Int. Cl.: H04W 8/24, H04W 88/06

(54) **METHOD FOR SIGNALING OF RADIO CAPABILITY INFORMATION**

(71) Applicant: Gemalto M2M GmbH, 81541 Munich (DE)
(72) Inventor: BREUER, Volker, 16727 BOETZOW (DE); DUMANN, Uwe, 16341 PANKETAL (DE); WENDLER, Ralf, 14612 FALKENSEE (DE); DIPPEL, Rainer, 12203 BERLIN (DE); LEHMANN, Ulrich, 12101 BERLIN (DE)
(74) Representative: Grevin, Emmanuel

(57) **Abstract**

The present invention relates to a method to operate a user equipment in a cellular network, the user equipment ascertaining a set of information relating to user equipment capabilities, comprising information relating to supported radio capabilities of the user equipment, the user equipment camping on a base node of the cellular network, for signaling the radio capability information the method comprises the steps of:
- determining a set of deployed frequency bands and/or combinations thereof, of at least one of the base node and its neighbouring nodes,
- filtering the set of information of the user equipment's capabilities taking into account:
(i) said set of deployed frequency bands;
(ii) at least one service the user equipment is configured to support,

- submitting a radio capability information message to the base node considering the filtered set of information of the user equipments capabilities.

## Description

### FIELD OF THE INVENTION

The present invention relates to a method for operating a user equipment. The invention also pertains to a user equipment using said method.

### BACKGROUND OF THE INVENTION

For advanced development of cellular networks for wireless communication the technology standards require user equipments that are supposed to operate in such cellular networks, to provide their radio capability information to the serving base node of the cellular network.

This is preferably used by the cellular network to align the communication link with the user equipment according to such radio capability information. Such radio capability information include in particular supported frequency bands and frequency band combinations for carrier aggregation resp. MIMO based signalling.

This requirement stems from 3G technology standards like UMTS, where a limited number of such frequency bands were foreseen. However, for the most recent releases and the increasing complexity in 4G and 5G this number did massively increase. The support of carrier aggregation resp. MIMO even multiply this amount. In UMTS the user equipment capabilities need to be signaled at registration or handover, given the increasing amount of information. For LTE (4G) the situation was enhanced so that the capabilities only need to be transferred at registration or during mobility when not being forwarded by the cellular network.

However, this leads to the situation that for LTE (and beyond) a mere signalling of the capability message(s) requires kilobytes of data to be transmitted, each time, e.g. in case of registration, further when a user equipment is moving from one area to another, e.g. in a car, or in case of inter-RAT handover e.g. from LTE to 3G. This does not only affect the user equipments but also the cellular networks, as this signalling leads to a congestion of the air interface without transporting a single byte of payload. Furthermore it needs to be considered that such signaling in case of critical serving radio conditions (which is the case for handovers) also leads to disadvantageous user experience including data interruption or call drops.

It is therefore the goal of present invention to overcome the mentioned disadvantages and to propose a solution for an improved signalling of radio capability information from the user equipment to the cellular network it is operating in.
Further alternative and advantageous solutions would, accordingly, be desirable in the art.

### SUMMARY OF THE INVENTION

For this it is according to a first aspect of the invention suggested a method to operate a user equipment according to claim 1. It is further suggested according to a second aspect of the invention a user equipment according to claim 9.

According to the first aspect of the invention it is proposed a method to operate a user equipment in a cellular network, the user equipment ascertaining a set of information relating to capabilities of the user equipment, comprising information relating to supported radio capabilities of the user equipment, the user equipment camping on a base node of the cellular network, for signaling the radio capability information the method comprises the steps of:
- determining a set of deployed frequency bands and/or combinations thereof, of at least one of the base node and its neighbouring nodes,
- filtering the set of information of the user equipment's capabilities taking into account:
   (i) said set of deployed frequency bands;
   (ii) at least one service the user equipment is configured to support,
- submitting a radio capability information message to the base node considering the filtered set of information of the user equipments capabilities.

The user equipment according to the invention is a user end device designated for communication according to one of the known wireless technology standards, like 4G, 5G or beyond with the cellular network. The user equipment is preferably equipped with the necessary circuitry for communicating over the air interface with the base nodes, resp. eNodeBs of the cellular network. This comprises in particular transceiver circuitry, including receiving and transmitting capabilities.

The user equipment resp. its transceiver is configured to receive and decode signals from base nodes. Before exchanging signals the user equipment synchronizes with a base node and eventually registers in the cellular network. The base node where the user equipment is operating with is called hereinafter the serving base node.

For establishing a communication link with the serving base node, the user equipment is preferably requested to provide its capabilities to the base node. Alternatively such provision of user equipment's capabilities happens during registration, in particular without a special request from the base node, or other network components.

Such user equipment's capabilities comprises in particular information relating to supported radio capabilities of the user equipment. Such radio capabilities comprise the supported frequency bands of the user equipment resp. its transceiver. Further the user equipment capabilities preferably comprises the abilities to support carrier aggregation and/or MIMO, preferably including for which band combinations this is the case. Obviously, it is highly likely that with more supported frequencies, also more frequency combinations are potentially possible to be part of the user equipment's capabilities.

In order to avoid an exponential increase of data size for submitting the user equipment capabilities, the inventive method suggests the following steps.

The method comprises that the user equipment has knowledge of its capabilities of itself. For that preferably it ascertains e.g. a stored list of its capabilities. Alternatively the capabilities are determined in a first step. This step is preferably only to be carried out once after first switch on, and the results are stored in a permanent memory circuity of the user equipment.

In the normal case the user equipment's capabilities do not change throughout the lifetime of a user equipment. However, preferably for the case of a hardware change, the user equipment has means to figure out such changes and consequently re-determine its capabilities.

Once the capabilities are available, and the user equipment is camping on a (serving) base node, the inventive method suggests that a set of deployed frequency bands and/or combinations thereof are determined for a base node, in particular the serving base node, and/or its neighbouring base node, resp. one if such neighbouring base nodes.

Such step of determining in particular comprises a signalling between user equipment and respective base node.

According to a preferred embodiment it is suggested that determining of a set of deployed frequency bands of at least one of the base node and the neighbouring base nodes comprises:
- reading of system information of the base node, said system information comprising at least one of:
- a set of deployed serving base node frequencies,
- a set of deployed neighbor frequencies,
- deriving deployed frequency bands and/or their combinations from said set of frequencies.

This embodiment suggests a preferred variant of determining the deployed frequency bands of a base node, be it the serving base node or a neighbor base node. This is in particular based on system information broadcasted by the base node, wherein either directly or indirectly the deployed frequencies can be derived.

Alternatively the deployed frequency bands could also be provided by means of a request-response message flow between the user equipment and the base node.

Preferably it is the serving base node, where the deployed frequency bands etc. are determined for. This assumes that the determination step is for the purpose of setting up a communication with the serving base node.

However it is also found as being helpful to determine additionally or alternatively the deployed frequency bands and supported band combinations. of one or more neighbor base nodes.

In particular for 5G it is highly likely that in idle mode the user equipment is camping on a different base node than the base node it is supposed to be camping during a running connection.

With this acquired information about the respective at least one base node the user equipment is now in the position to conduct a step of filtering of its user equipment capabilities.

Such filtering has the goal of reducing the supported capabilities to those who could be of interest for the envisaged data connection established by means of a base node, in particular the serving base node.

The result of the filtering step is a filtered set of information of the user equipment's capabilities.

For doing so, the filtering step according to the inventive method comprises to take into account at least the deployed frequency bands and/or combinations thereof of the at least one base node, for which the determining step was conducted.

In other words: the goal of the inventive method is to ignore all those capabilities, which are not of interest for the base node which is designated to set up a communication session with.

As it can be seen, this is the case for frequency bands not deployed by the base node. Not deployed means in particular, that such frequency band is not supported, in particular physically not supported, by the base node. Hence it would be of no use for the base node to receive an information about a supported frequency band of the user equipment, if it is not deployed by the base node itself.

Alternatively or additionally it is known that certain operators in certain countries acquire the right to use certain frequency bands, and in others not.

Hence in those frequency bands where no license is available, the base nodes of the operator will inform which frequency bands they are allowed to support. This is preferably also implemented in hardware of the base node.

However such filtering may still not be sufficient and leave room for still immense data sizes of such capability messages.

Therefore according to the inventive method it is further suggested to consider for the step of filtering at least one radio service that the user equipment is configured to support.

Depending upon the service, e.g. voice or data transmission, with further subflavours, e.g. high amount of data, high reliability etc. a further fine tuning is envisaged.

Typically in the field of machine type communication user equipments are designated for only a few functionalities, matching to such services. Hence it is easier to identify the designated at least one service, for which a filtering is supposed to be carried out.

Further steps of filtering are envisaged, as can be seen in the further embodiments of the invention. In any case, once the filtering step has terminated, the user equipment is in the position to provide to the base node the respective filtered set of information of the user equipments capabilities.

This is supposed to happen through a radio capability information message to the respective base node, as it is already defined in the standard TS36.306 for LTE. This document defines the user equipments capabilities which are supposed to be signaled/exchanged. TS36.331 defines the message to be used for capability signaling of the user equipment. With the submitted capability message the envisaged base node knows what to expect from the user equipment, and which allocation to be carried out when setting up a connection.

When the inventive method is applied, an immense reduction of datasize is achieved, and consequently the capability message is much faster and with less impact on user equipment and network side exchange. Additionally the impact is in particular remarkable in terms of power consumption for the user equipment.

Further a lower latency and signalling load reduction is achieved with this inventive method.

One further advantage of the inventive method is, that it is applicable for legacy cellular networks resp. base nodes of earlier releases. This is because the same radio capability information message from the user equipment can be used, it just includes less data than before. As such data are anyhow not relevant for the receiving base node, this reduction does not harm. The receiving base node does not need to know, that the user equipment could support other frequency bands and band combinations.

This aspect is in particular of relevance as in older releases the capability message was limited in size, and would eventually not be usable for user equipments with a whole lot of supported frequency bands.

In a more advanced approach it would also be beneficial to always be able to limit the capability message to the size of one transport block, to avoid message concatenation.

According to a preferred embodiment the method further comprising the steps of determining a set of quality of service related characteristics of at least one of the deployed frequency bands, wherein the user equipment further considers for the step of filtering if said characteristics of the at least one deployed frequency band indicates sufficient suitability for communication with the base node.

This embodiment further enlarges the filtering options by considering further user equipment specific characteristics. The goal is to further reduce the amount of capabilities, resp. frequency bands and combinations.

For this embodiment this at least one further filtering criterion relates to the quality of service the user equipment expects from the base node. Such frequency band in particular relates to one or more of the deployed frequency bands of the base node, in particular a subset of all deployed frequency bands.

This is in particular of relevance for a stationary device, e.g. when fixed to a wall, or only used in a small area.

When in this range a certain frequency band is not sufficiently reliable, it is supposed to be filtered out by the user equipment.

Preferably the user equipment carries out measurements of the signal strength of the respective frequency bands at the position it is installed. This information is taken into account for determining the reliability, preferably by way of a quality of service value. Under a given threshold a frequency band is then not considered anymore and consequently filtered out.

According to another advantageous embodiment it is suggested that the user equipment further considers for the step of filtering at least one of:
- a selection of at least one network slice,
- supported technology standard release of at least one of the base node and/or the user equipment.

This embodiment introduces further filter criteria, wherein also one of both is applicable for a user equipment implementing the inventive method.

As the first option the filtering considers the selection of at least one network slices. In 5G the concept of network slices is introduced. That means that the cellular network provides one or more separated areas (virtually or in separate components) designates for certain services and/or device types. This is for maintaining stability, in particular to assure that a massive amount of MTC (machine type communication) resp. IoT (Internet of Things) devices cannot impact with a large number of parallel request the whole cellular network, including the handling of mobile handsets. The network slicing enables multiple separate end-to-end networks (network slices) sharing the same or using separate infrastructure of the cellular network. Each network slice can be customized independently for different application and business scenarios/usages accordingly it allows to separate different services/user groups.

To consider the selection of at least one network slice through the user equipment consequently opens the possibility to consider only (or mainly) those frequency bands that relate to the selected slices.

Alternatively or additionally it is considered the supported technology standard release of the at least one of the base nodes or the user equipment. This option has the goal to figure out whether the base node operates in higher order MIMO for throughput or rather limited in coverage. A typical way is to determine whether the base node is a macro, micro or pico base node which often corresponds to MIMO orders, i.e. in pico cells MIMO is used to increase throughput, whilst higher order MIMO in macro cells is limited due to MIMO being sensitive on interference.

And whether the system information contains high mobility re-selection parameters which are characteristic for coverage intended base node being also intended to cope for high velocity users.

Such options strongly relate to the supported technology standard release. According to another preferred embodiment it is proposed that the user equipment further considers for the step of filtering a preconfiguration of the user equipment as at least one of:
- configured for coverage centric operation or
- configured for throughput centric operation.

With this enhanced filtering it is suggested that a user equipment has a designated way of operation. Such ways of operation are as part of this embodiment preferably to be coverage centric or throughput centric.

It is in particular proposed that the method may comprise one of both options, or a combination of both. That means, a user equipment would be capable to support both the coverage centric operation and throughput centric operation, or only one of both.

Both options of operational preconfiguration have in common that they require - in particular in the context of 5G networks - different frequency bands. A throughput centric operation is mainly operable in higher frequency areas, typically combined with beamforming mechanisms.

However this does not lead to a high coverage. Hence, when the user equipment would be preconfigured to support more coverage related operation, that means in particular low data amount but which high reliability of operating in a serviced area, then the respective lower frequency bands would be favored during the filtering process.

Preferably the user equipment determines such preconfiguration indication before carrying out the filtering step. It is in particular advantageous based on the designation of the user equipments appliance to decide about the preconfiguration. E.g. when the user equipment is mounted in a vehicle, then a coverage centric operation is preferably preconfigured.

Nonetheless in both options it is still to consider if the base node does support such respective frequencies at all. If the choice is only to make no communication instead of supporting the desired frequency bands - although other frequencies band would be shared among the user equipment and the serving base node, then the filtering following this preconfiguration would needed to be loosened. In such case however a change of the base node is preferably, and consequently the instruction to do so a valid outcome, if such base node is available.

According to another preferred embodiment it is suggested that the user equipment further considers for the step of filtering a set of information stored on the connected subscription identity card.

This embodiment suggests that further filtering could be carried out in consideration of data stored in a connected subscription identity card. This is typically a SIM card or UICC, reps. eUICC, removable connected or soldered or integrated, including a soft-SIM.

Information stored on the subscription identity card usable for filtering are in particular the MNC/MCC, in combination with deployed and/or allowed technologies. With such information the user equipment in particular figures out which services it is capable to use. In particular for the deployment of 5G features like ultra-reliable low-latency (URLL) etc. it is envisaged to have an indication of a subscription allowing or not allowing usage of such features.

When such an indication is available, the user equipment can take the necessary steps to filter out such frequency bands, which do not support such service, resp do support (only) such features.

According to another preferred embodiment it is suggested that the user equipment's capabilities comprising supported frequency bands of the user equipment, wherein the user equipment further is capable of carrying out other communication by means of the same transceiver circuitry reserving at least one of the supported frequency bands, wherein the user equipment further considers for the step of filtering the respective at least one frequency band.

Preferably it is suggested that the user equipment further being capable of carrying out direct device-to-device communication, wherein the user equipment further considers for the step of filtering the respective at least one supported frequency band for said device-to-device communication.

This embodiment takes into account that the user equipment might be configured to address other communication carriers on one of the deployed frequency bands. One example is Device-2-Device communication, also known under the options of V2X-PC5 resp. sidelink or communication via LTE-Uu-link, both known as modes 3 and 4. Additionally also Homeland security b and Wifi etc. might be affected. When this is applicable to the same transceiver circuitry, then the user equipment preferably does not report capabilities to the base node in those of its supported frequency bands used for that communication, even when the base node should support it. This is useful to avoid in those areas disturbances to the mentioned carriers. Therefore those supported frequency bands are preferably filtered out before submitting them in the capability information message.

According to the second aspect of the invention it is proposed a user equipment for operating in a cellular network when camping on a base node of the cellular network, the user equipment being configured for ascertaining a set of information relating to capabilities of the user equipment, comprising information relating to supported radio capabilities of the user equipment, wherein for signaling the radio capability information to the base node the user equipment is configured to:
- determine a set of deployed frequency bands and/or combinations thereof, of at least one of the base node and its neighbouring nodes,
- filter the set of information of the user equipment's capabilities taking into account:
   (i) said set of deployed frequency bands;
   (ii) at least one service the user equipment is configured to support,
- submit a radio capability information message to the base node considering the filtered set of information of its capabilities.

The second aspect of the invention shares the advantages of the first aspect.

The user equipment comprises in particular the necessary circuitry for communicating over the air interface with the base nodes, resp. eNodeBs of the cellular network. This comprises in particular transceiver circuitry, including receiving and transmitting capabilities. According to the circuitry also a separate structural design of transmitting circuitry and receiving circuitry is encompassed by the inventive user equipment. This in particular relates to a radio modem connected to a device appliance.

Further the user equipment advantageously comprises processing circuitry for running software implementing in particular the methods of the first aspect of the invention.

Additionally permanent and/or volatile memory is part of the user equipment, for storing said software executables, configuration data and/or cached data

As it is shown this invention advantageously solves the depicted problem and proposes a solution for improved signalling of radio capability information, in particular a reduced set without losing signalling capabilities.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: shows the UE capability message flow according to the prior art;
- Fig. 2: shows a user equipment according to an embodiment of the invention in collaboration with a base node;
- Fig. 3: represents a supported frequency bands user equipment of the type to which the present invention is applied as an embodiment and of serving base node of said user equipment;
- Fig. 4: shows the UE capability message flow according to a preferred embodiment of the inventive method.

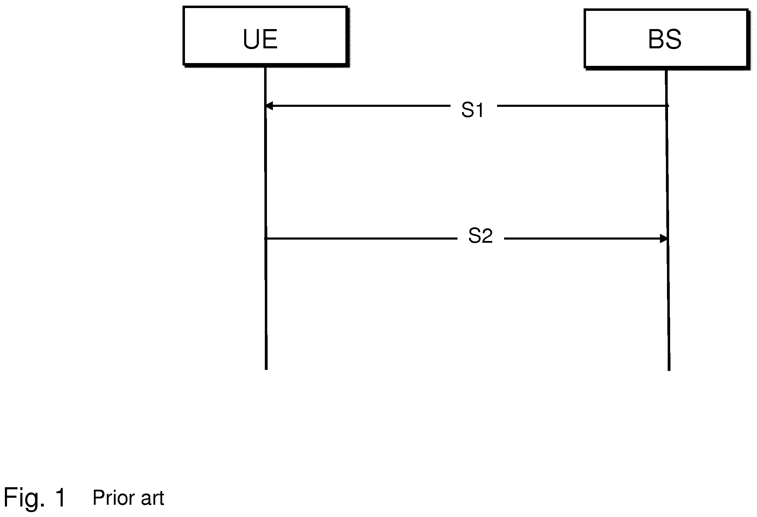

FIG. 1 schematically shows in a sequence diagram the message flow between a user equipment UE and a base node BS, in particular the serving base node, for providing the UE capabilities to the base node, according to the prior art.

Here it is the base node BS, in particular during registration procedure of the user equipment UE, that issues a UE capability request S1 to the user equipment. Said capability request is issued by the cellular network if user equipment capabilities have not been forwarded by the previous serving base nodes. In case of an initial attach the user equipment sends its capabilities as part of the network registration procedure to the base node. In general user equipment's capabilities are maintained in the MME i.e. being part of the NAS procedure TS23.401 and carried out via RRC procedures TS36.331 e.g. If the user equipment has changed its E-UTRAN radio access capabilities, it shall request higher layers to initiate the necessary NAS procedures (see TS 23.401 [41]) that would result in the update of user equipment's radio access capabilities using a new RRC connection.

Typically the UE capability request does not include anything else than a request code, so that the user equipment knows it is requested to provide its own capabilities.

In response or alternatively as initial registration the user equipment submits with the UE capability response message S2 its capabilities. With that the base node can in particular figure out in which frequencies it may instruct the user equipment to exchange signals either in uplink or in downlink direction, or in both.

In this prior art embodiment the UE capability response message comprises all information relating to UE capabilities. This relates in particular to all supported frequency bands and furthermore all combination of such frequency bands usable for MIMO/Carrier aggregation purposes.

With the increase of available frequency bands in the recent developments of the 4G technology standard (also known as LTE = Long term Evolution) and in particular the 5G Technology standard (also known as NR = New Radio), this message might become huge. Starting from release 10 there is by now a limitation in TS36.331, for the field supportedBandCombination-maxBandComb per release, which shows to be already too narrow.

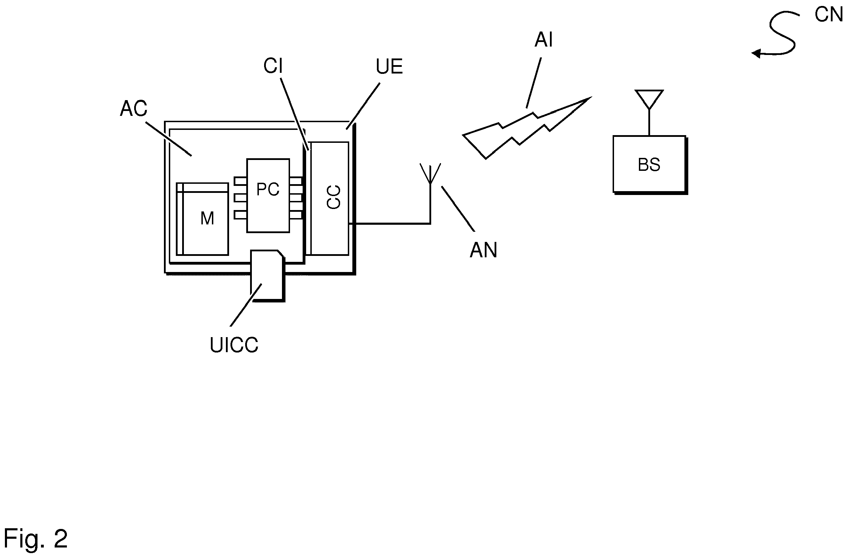

Fig. 2 shows in an exemplifying embodiment a user equipment UE operating over the air interface AI with one of the base nodes BS of a cellular network CN. The exemplifying user equipment comprises an application component AC and a communication component CC, the latter comprising transceiver circuitry for carrying out the communication tasks over the air interface, by means of the antenna AN.

The application component AC of this exemplifying user equipment further comprises processing circuitry PC and a memory M. The memory M is in particular permanent memory and/or volatile memory. In the memory M software is stored which is executed on the processing circuitry PC, and in particular configured to control the communication component CC, in particular by means of a control interface CI.

The user equipment UE is further equipped with a connected subscription identity card UICC, in particular a SIM card or a Universal Integrated Circuit Card, which in this embodiment is configured to provide information for carrying out the filtering.

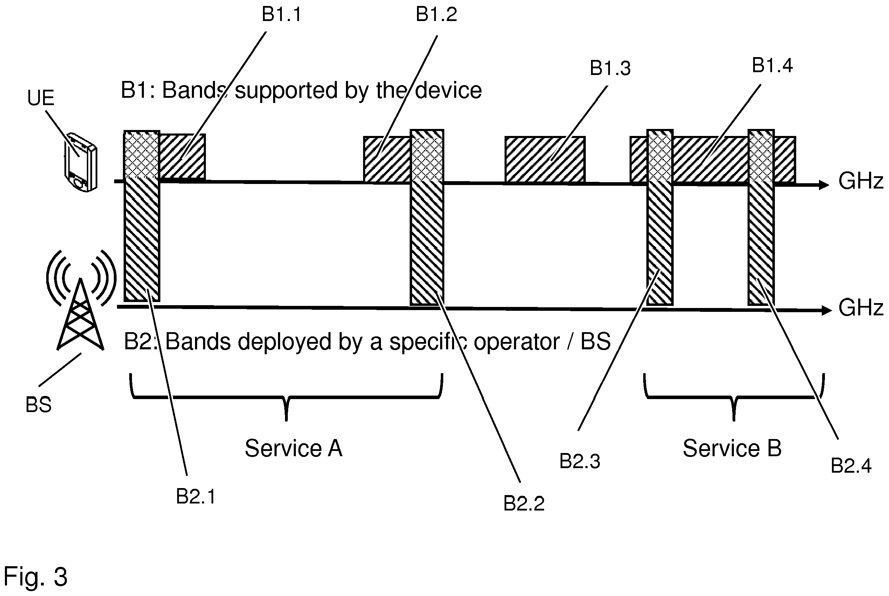

The inventive solution is based on the findings shown in Fig. 3. Here it is shown for an exemplifying user equipment UE and an exemplifying base node BS which frequency bands each are supported resp. deployed.

It can be seen in, that the user equipment UE is configured to support the frequency band blocks B1.1 - B1.4. Each of them may comprise various frequency bands resp. ranges along the frequency axis, with growing frequency in GHz.

Compared to that the deployed frequency bands B2.1 - B2.4 of the base node BS are displayed. Obviously the base node has in this example fewer frequency bands available than the user equipment, may it be due to hardware reasons or regulatory reasons.

In the chequered areas the frequency bands of the base node and the user equipment overlap, that means the frequency bands that the base node and the user equipment have in common and can be selected for communication. For the base node it would in this embodiment make no difference when it would be informed through the UE capability response message S2 that frequency band block B1.3 is supported by the user equipment: This frequency band is not deployed for the base node. The scheduling of the user equipment's signalling on different frequency bands would not be changed at all, when the information about supported frequency band block B1.3 would be omitted in the UE capability response message S2.

Additionally the lower area of the frequency range is better suitable for service A, e.g. small data package transmission or voice communication, while the area with higher frequencies is dedicated for service B, e.g. high-speed high-volume data transmission, like for video streaming.

In the case that the user equipment is dedicated for one of the services resp. plans to only request such services, then it would additionally make no sense to report in the UE capability response message also the frequency bands dedicated for one or more services that the user equipment is not using.

This is all the more applicable to machine-type communication devices that are dedicated for a special task. E.g. a Point-of-Sale (POS) device will most probably only submit every now and then a few identification data and expect a response from a server. This requires no high data rates, therefore the area of service B would not be needed, and consequently the frequency ranges for this service B as well.

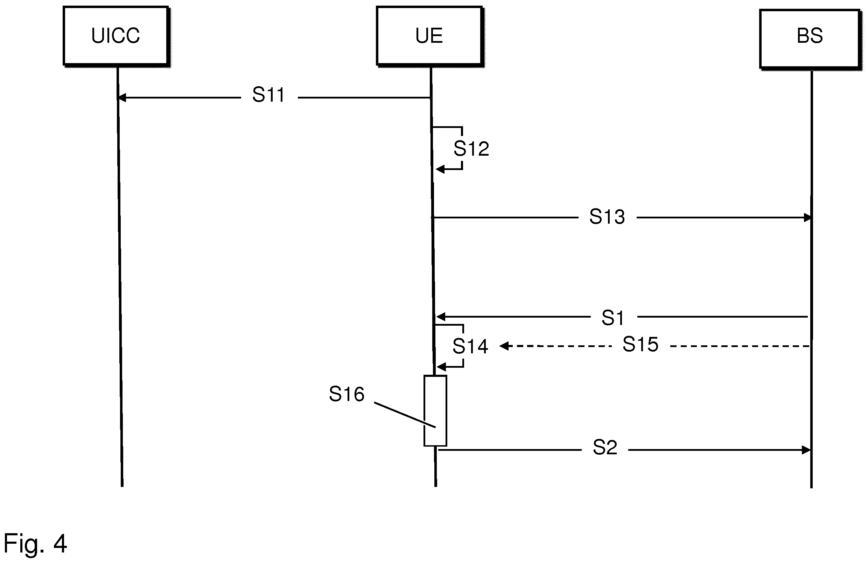

In Fig. 4 a sequence diagram is shown that shows a message flow of submitting a UE capability response message to the serving base node according to a preferred embodiment.

It starts with message S11 between the user equipment UE and a universal identification circuit card UICC, also known as SIM card, which at least securely stores the network access credentials. It also holds information about the accessible cellular network and the subscriptions permissions.

With these information the user equipment UE retrieves its radio capabilities with message step S12. The results are preferably stored locally, in order to save such retrieval step for the future, as long as no changes (e.g. of the SIM card) occur.

Then the user equipment indicates to the base node its desire to camp on base node BS, by means of message S13.

As part of the registration resp. camping procedure, the base node requests with UE capability request S1 the radio capabilities of the user equipment. This is helpful for setting an applicable scheduling, in particular in which frequency bands the user equipment is able to operate.

In response the user equipment UE retrieves in steps S14 additional information needed for such data, in particular including information broadcasted from the base node BS by means of broadcast message S15. Such broadcast in particular is conducted by means of the common system information (SI) broadcast.

The retrieved capabilities are based on such retrieved information consequently filtered during step S16. Such filtering considers the envisaged service of the user equipment UE, the deployed frequency bands of the base node, provided with the broadcast message S15, and optionally much more information, as indicated in the many preferred embodiments. Such additional information are in particular retrieved through step S12, resp. are stored in a memory unit of the user equipment UE.

Consequently the filtering leads to a reduction of the determined set radio capabilities. The outcome of this filtering process, in other words: the remaining radio capabilities are then coded in a UE capability response message S2 and submitted to the base node BS.

In the following the user equipment UE and the base node BS can carry out data transmissions in uplink or downlink, taking into account the UE capabilities signalled by the user equipment to the base node in step S2.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may however be modified. The above detailed description is, therefore, not to be taken in a limiting sense. The scope of the present invention is defined only by the appended claims, appropriately interpreted, along with the full range of equivalents to which the claims are entitled.

## Claims

1. Method to operate a user equipment (UE) in a cellular network (CN), the user equipment ascertaining a set of information relating to capabilities of the user equipment, said capabilities comprising information relating to supported radio capabilities of the user equipment, the user equipment camping on a base node (BS) of the cellular network (CN), for signaling the radio capability information the method comprises the steps of:
- determining a set of deployed frequency bands (B2) and/or combinations thereof, of at least one of the base node (BS) and its neighbouring nodes,
- filtering the set of information of the user equipment's capabilities taking into account:
(i) said set of deployed frequency bands and/or combinations thereof;
(ii) at least one service the user equipment is configured to support,
- submitting a radio capability information message (S2) to the base node (BS) considering the filtered set of information of the user equipment's capabilities.

2. Method according to claim 1,
further comprising the steps of determining a set of quality of service related characteristics of at least one of the deployed frequency bands,
wherein the user equipment (UE) further considers for the step of filtering if said characteristics of the at least one deployed frequency band (S2) indicates sufficient suitability for communication with the base node (BS).

3. Method according to at least one of the previous claims,
wherein the user equipment (UE) further considers for the step of filtering at least one of:
- a selection of at least one network slice,
- supported technology standard release of at least one of the base node and/or the user equipment.

4. Method according to at least one of the previous claims,
wherein the user equipment (UE) further considers for the step of filtering a preconfiguration of the user equipment (UE) as at least one of:
- configured for coverage centric operation or
- configured for throughput centric operation.

5. Method according to at least one of the previous claims,
wherein the user equipment (UE) further considers for the step of filtering a set of information stored on the connected subscription identity card (UICC).

6. Method according to at least one of the previous claims,
the user equipment's capabilities comprising supported frequency bands of the user equipment, wherein the user equipment (UE) further being capable of carrying out other communication by means of the same transceiver circuitry reserving at least one of the supported frequency bands,
wherein the user equipment further considers for the step of filtering said respective at least one supported frequency band.

7. Method according to at claims 6,
the user equipment (UE) further being capable of carrying out direct device-to-device communication,
wherein the user equipment further considers for the step of filtering the respective at least one supported frequency band for said device-to-device communication.

8. Method according to at least one of the previous claims,
wherein determining of a set of deployed frequency bands of at least one of the base node (BS) and the neighbouring base nodes comprises:
- reading (S15) of system information of the base node (BS), said system information comprising at least one of:
- a set of deployed serving base node frequencies,
- a set of deployed neighbor frequencies,
- deriving deployed frequency bands (B2) and/or their combinations from said set of frequencies.

9. User equipment (UE) for operating in a cellular network (CN) when camping on a base node (BS) of the cellular network, the user equipment being configured for ascertaining a set of information relating to capabilities of the user equipment, said capabilities comprising information relating to supported radio capabilities (B1) of the user equipment (UE),
wherein for signaling the radio capability information to the base node (BS) the user equipment (UE) is configured to:
- determine a set of deployed frequency bands (B2) and/or combinations thereof, of at least one of the base node (BS) and its neighbouring nodes,
- filter the set of information of the user equipment's capabilities taking into account:
(i) said set of deployed frequency bands;
(ii) at least one service the user equipment (UE) is configured to support,
- submit a radio capability information message (S2) to the base node considering the filtered set of information of its capabilities.

10. User equipment (UE) according to claim 9,
further comprising an application component (AC) and a communication component (CC), communicatively coupled by a control interface (CI), the communication component comprising transceiver circuitry,
wherein the application component (AC) provides to the communication component (CC) via the control interface (CI) instructions for filtering the set of radio capabilities,
wherein the user equipment (UE) is further configured to consider said instructions for filtering its capabilities.

11. User equipment (UE) according to at least one of the claims 9 or 10, further configured to determine a set of quality of service related characteristics of at least one of the deployed frequency bands,
wherein the user equipment (UE) is further configured to consider for filtering its capabilities if said characteristics of the at least one deployed frequency band (B2) indicates sufficient suitability for communication with the base node (BS).

12. User equipment (UE) according to at least one of the claims 9 to 11, further configured to consider for filtering its capabilities at least one of:
- a selection of at least one network slice,
- supported technology standard release of at least one of the base node (BS) and/or the user equipment (UE).

13. User equipment (UE) according to at least one of the claims 9 to 12, further configured to consider for filtering its capabilities a preconfiguration of the user equipment (UE) as at least one of:
- configured for coverage centric operation or
- configured for throughput centric operation.

14. User equipment (UE) according to at least one of the claims 9 to 13, further comprising a connected subscription identity card (UICC), and
wherein the user equipment is further configured to considers for filtering its capabilities a set of information stored on said subscription identity card (UICC).

15. User equipment (UE) according to at least one of the claims 9 to 14,
wherein the user equipment's capabilities comprising supported frequency bands (B1) of the user equipment,
the user equipment further being capable of carrying out other communication by means of the same transceiver circuitry reserving at least one of the supported frequency bands (B1),
wherein the user equipment (UE) is further configured to consider for filtering its capabilities the respective at least one supported frequency band (B1).

16. User equipment (UE) according to at least one of the claims 9 to 15, further configured, while determining of a set of deployed frequency bands (B2) of at least one of the base node (BS) and the neighbouring base nodes, to read system information of the base node, said system information comprising at least one of:
- a set of deployed serving base node frequencies,
- a set of deployed neighbor frequencies,
- derive deployed frequency bands (B2) and/or their combinations from said set of frequencies.
